# NEUE EUROPÄISCHE PATENTSCHRIFT

(11) **EP 2 174 537 B2**
(45) Veröffentlichungstag und Bekanntmachung des Hinweises auf die Entscheidung über den Einspruch: **16.11.2022**
(45) Hinweis auf die Patenterteilung: 22.05.2013
(21) Anmeldenummer: 09165934.2
(22) Anmeldetag: 21.07.2009
(51) Int. Cl.: A01B 69/00

(54) **Verfahren zur Einsatzsteuerung von landwirtschaftlichen Maschinen**
Method for controlling the use of agricultural machines
Procédé de commande d'utilisation de machines agricoles

(30) Priorität: 08.10.2008 DE 102008050460
(43) Veröffentlichungstag der Anmeldung: 14.04.2010
(73) Patentinhaber: CLAAS Selbstfahrende Erntemaschinen GmbH, 33428 Harsewinkel (DE)
(72) Erfinder: Diekhans, Dr. Norbert, 33335, Gütersloh (DE); Meyer zu Helligen, Lars Peter, 32139, Spenge (DE); Nienaber, Gerhard, 59320, Ennigerloh (DE)
(74) Vertreter: CLAAS Gruppe

(56) Entgegenhaltungen:
- EP-A- 1 616 470
- EP-A- 1 840 690
- EP-A- 1 847 897
- EP-A2- 1 602 267
- WO-A-00/35265
- DE-A1-102004 027 242
- D. Bochtis et al. ,.Field Operation Planning for Agricultural Vehicles: A Hierarchical Modeling Framework?. Agricultural Engineering International: the CIGR Ejournal.Manuscript PM 06 021. Vol. IX. February 2007
- D. Bochlis et al. ?A Decision Support System Development for the Evaluation of Machinery Management Systems?. Proceedings of the 5thNational Conference of Agricultural Engineers, Larissa, 18.-20. Oktober 2007,Seiten 821 bis 828.
- D. Bochtis et al. ?Optimal Dynamic Motion Sequence Generation for Multiple Harvesters". Agricultural Engineering International: the CIGR Ejournal.Manuscript PM 07 001. Vol. IX. July 2007

## Beschreibung

Die vorliegende Erfindung betrifft ein Verfahren zur Steuerung eines Einsatzes von fahrbaren landwirtschaftlichen Maschinen auf einer von den Maschinen zu bearbeitenden Fläche wie etwa eines Ernte- oder Aussaateinsatzes oder der Ausbringung von Hilfsstoffen wie Dünger oder Pflanzenschutzmittel.

Aus DE 10 2004 027 242 ist ein System zur Planung eines Maschineneinsatzes bekannt, das ausgelegt ist, um die von einer Maschine bei der Bearbeitung einer landwirtschaftlichen Fläche abgefahrene Route zu optimieren. Optimierungsgesichtspunkte sind die Minimierung der Fahrstrecke der Maschine sowie der Fahrwege zwischen der Maschine und einem Überladefahrzeug. Das System setzt die von der Maschine zu bearbeitende Fläche als bekannt voraus; es ist daher nicht geeignet, einen Einsatz von mehreren kooperierenden Maschinen zu planen, was eine Aufteilung einer zu bearbeitenden Fläche in von den einzelnen Maschinen zu bearbeitende Teile voraussetzen würde.

Aus DE 10 2004 034 799 A1 ist ein Kommunikationssystem bekannt, das es landwirtschaftlichen Maschinen während eines Einsatzes ermöglicht, einsatzbezogene Informationen miteinander auszutauschen und sich dadurch miteinander zu koordinieren. Das System unterstützt jedoch nur die Kommunikation im laufenden Einsatz; eine vorausschauende Planung eines Einsatzes ist damit nicht möglich.

Ferner ist aus der EP 1 840 690 ein Routenplanungssystem bekannt geworden, welches die Erstellung eines für eine Vielzahl von Arbeitsmaschinen geltenden Routenplanes offenbart, wobei die den Routenplan nutzenden Arbeitsmaschinen zunächst gemeinschaftlich den Routenplan generieren. Dabei erstellt jede der Arbeitsmaschinen für eine Teilfläche des zu bearbeitenden Territoriums den Routenplan. Eine auf diese Weise zu erstellender Routenplan unterliegt sehr komplexen Zusammenhängen, da zwischen einer Vielzahl von Arbeitsmaschinen Daten ausgetauscht werden müssen. Zudem können die Arbeitsmaschinen nicht flexibel eingesetzt werden, da jeder einmal vorhandenen Arbeitsmaschine eine konkrete Aufgabe bei der Erstellung des gemeinsamen Routenplans zugewiesen wird.

Es liegt auf der Hand, dass die unter Gesichtspunkten der Wirtschaftlichkeit und des rationellen Einsatzes von Ressourcen optimierte Planung eines Einsatzes um so aufwändiger ist, je größer die Zahl der daran beteiligten und ggf. miteinander inter-agierenden Maschinen ist. Es besteht daher Bedarf nach einer Technik, die eine Planung von umfangreicheren Einsätzen in der Landwirtschaft, insbesondere unter Beteiligung mehrerer Maschinen, unterstützt.

Die Aufgabe wird gelöst durch ein Verfahren zur Steuerung eines Einsatzes von fahrbaren landwirtschaftlichen Maschinen auf einer Fläche mit den Merkmalen des Anspruchs 1.

Der hierarchische Aufbau der Planungsstufe des Verfahrens mit aufeinander aufbauenden Planungsschritten ermöglicht eine einfache Erweiterung des Verfahrens zur Berücksichtigung einer großen Zahl von veränderbaren Parametern, zu denen auch die Anzahl der am Einsatz beteiligten Fahrzeuge gehören kann. Die fortlaufende Überwachung des Einsatzablaufs auf Übereinstimmung mit den bei der Planung getroffenen Festlegungen ermöglicht die Berücksichtigung eines unvorhergesehenen Ereignisses.

Wenn in jedem Planungsschritt wenigstens ein Merkmal des Einsatzes festgelegt wird, beruht die schrittweise Verfeinerung in den auf den ersten Planungsschritt folgenden Schritten vorzugsweise darin, jeweils wenigstens ein Merkmal des Einsatzes kompatibel zu jedem in einem früheren Planungsschritt festgelegten Merkmal des Einsatzes festzulegen. Wenn im Einsatz eine signifikante Abweichung von den getroffenen Festlegungen in einem der festgelegten Merkmale festgestellt wird, dann ist der wiederholte Planungsschritt zweckmäßigerweise derjenige, in dem das betreffende Merkmal festgelegt wurde. Wenn ein auf den Ergebnissen dieses wiederholten Planungsschritt aufbauender Planungsschritt existiert, wird dessen Wiederholung meist auch notwendig sein. Indem jedoch die Festlegungen der vorhergehenden Planungsschritte normalerweise (Ausnahmen werden später noch beschrieben) unangetastet bleiben, kann der Verarbeitungsaufwand bei der Anpassung der Einsatzplanung an die beobachtete Abweichung bzw. das unvorhergesehene Ereignis minimiert werden.

Vorzugsweise erfolgt in wenigstens einem der Planungsschritte die Festlegung eines Merkmals anhand eines gemutmaßten Parameters der zu bearbeitenden Fläche, während des Ausführens des Einsatzes wird der Parameter erfasst, und eine signifikante Abweichung des Merkmals wird angenommen, wenn die Abweichung zwischen gemutmaßtem und erfassten Parameter eine Grenze überschreitet.

Bei dem Parameter kann es sich um einen globalen Parameter der zu bearbeitenden Fläche, insbesondere eine Erntegutmenge handeln. Die gemutmaßte Erntegutmenge kann dann in einem oder mehreren Planungsschritten herangezogen werden, um Merkmale wie etwa die Dauer des Einsatzes, die Zahl der daran beteiligten Maschinen etc. festzulegen.

Um eine signifikante Abweichung des festgelegten Merkmals festzustellen, ist es zweckmäßig, den globalen Parameter aus im Laufe der Bearbeitung der Fläche gewonnen Daten zu extrapolieren, zum Beispiel indem die zu erwartende Gesamterntemenge aus dem zu einem gegebenen Zeitpunkt abgeernteten Bruchteil der Fläche und der eingebrachten Erntemenge hochgerechnet wird. Wenn der hochgerechnete Wert über dem ursprünglich gemutmaßten liegt, kann es erforderlich sein, die geplante Dauer des Einsatzes zu verlängern oder die Zahl der eingesetzten Maschinen zu erhöhen.

Der gemutmaßte bzw. erfasste Parameter kann auch ein ortsabhängiger Parameter der zu bearbeitenden Fläche sein, wie etwa Flächenertrag, Reifegrad, Feuchtegehalt oder Sortenreinheit des Ernteguts, die auf der zu bearbeitenden Fläche ortsabhängig unterschiedlich sein können. Wenn die zu bearbeitende Fläche Teilflächen unterschiedlicher Qualität umfasst, liegt auf der Hand, dass durch Berücksichtigung des von Ort zu Ort veränderlichen Flächenertrags eine genauere Hochrechnung der zu erwartenden Gesamterntemenge im Laufe der Bearbeitung möglich ist, als wenn ortsabhängige Schwankungen des Flächenertrages unberücksichtigt bleiben. Die hierfür benötigten großen Mengen ortsabhängiger Daten können insbesondere bei einer früheren Bearbeitung derselben Fläche gewonnen sein.

Die Berücksichtigung von ortsabhängigen, auf die Qualität des Ernteguts bezogenen Parametern wie Reifegrad, Feuchtegehalt und Sortenreinheit ermöglicht es, einen Ernteeinsatz so zu planen, dass mehrere Maschinen parallel oder eine Maschine jeweils sukzessive mehrere qualitativ unterschiedliche Chargen von Erntegut gewinnt, die später getrennt voneinander verarbeitet bzw. vermarktet werden können.

Wenn die Wiederholung des Planungsschrittes, in dem das Merkmal festgelegt wurde, bei dem die signifikante Abweichung festgestellt worden ist, scheitert, wird zweckmäßigerweise ein dem gescheiterten Planungsschritt vorangehender Planungsschritt wiederholt wird. Dadurch wird die Möglichkeit geschaffen, die Festlegungen dieses Schrittes abzuwandeln und zu einer Festlegung zu gelangen, die die erfolgreiche Durchführung des gescheiterten Schritts ermöglicht.

Zu den in einem oder mehreren frühen Planungsschritten zu treffenden Festlegungen gehören vorzugsweise die Dauer des Einsatzes, die Zahl der an dem Einsatz beteiligten Maschinen sowie gegebenenfalls die Zahl von Versorgungsfahrzeugen für den Transport von Material zwischen den Maschinen und wenigstens einem Stützpunkt.

In einem oder mehreren späten Planungsschritten erfolgt vorzugsweise eine Aufteilung der zu bearbeitenden Fläche in jeweils einer der Maschinen zur Bearbeitung zugewiesene Teilflächen.

Auf den Schritt der Aufteilung in Teilflächen folgt vorzugsweise ein Planungsschritt, in dem für jede Maschine auf der ihr zugewiesenen Teilfläche eine Fahrtroute festgelegt wird, das heißt bei dem diese Fahrtroute das in dem betreffenden Planungsschritt festgelegte Merkmal ist.

Dieser Planungsschritt kann wiederum zweckmäßigerweise unterteilt werden in das Zerlegen der jeweils einer Maschine zur Bearbeitung zugewiesenen Teilfläche in Unterflächen, das Festlegen der Bearbeitungsreihenfolge der Unterflächen und das Festlegen der von der Maschine abzufahrenden Route auf jeder Unterfläche.

Falls sich während des Einsatzes herausstellt, dass der Planungsschritt des Zerlegens, Festlegens der Reihenfolge und der Fahrtroute wiederholt werden muss, wird zunächst versucht, unter Beibehaltung der zuvor festgelegten Unterflächen und Fahrtrouten nur die Reihenfolge, in der die Unterflächen bearbeitet werden, neu festzulegen. Dies ist besonders dann zweckmäßig, wenn der Parameter die Feuchtigkeit des Ernteguts ist, denn diese kann sich im Laufe des Einsatzes merklich ändern. Wenn zum Beispiel beim Abernten einer Unterfläche das dort anstehende Erntegut sich als feuchter als ursprünglich gemutmaßt erweist, kann es genügen, die Bearbeitung dieser Unterfläche zurückzustellen und zunächst andere Unterflächen zu bearbeiten, während das Erntegut auf der zurückgestellten Unterfläche von der Sonne getrocknet wird.

Weitere Merkmale und Vorteile der Erfindung ergeben sich aus der nachfolgenden Beschreibung von Ausführungsbeispielen unter Bezugnahme auf die beigefügten Figuren.
- Fig. 1: zeigt ein schematisches Flussdiagramm des erfindungsgemäßen Verfahrens; und
- Fig. 2-5: veranschaulichen den Ablauf des Verfahrens anhand von Kartendarstellungen.

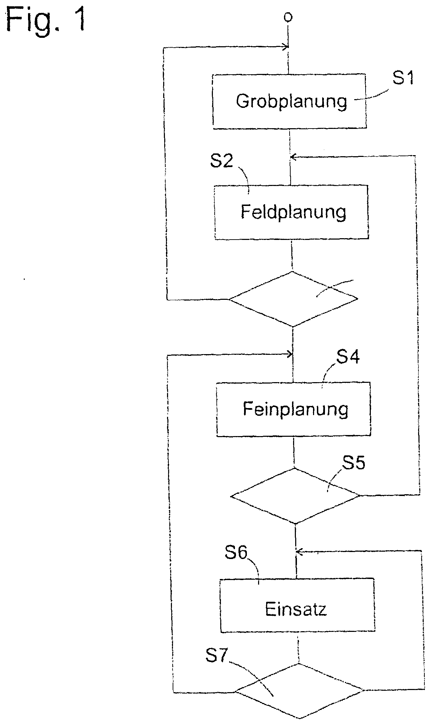

Das Verfahren wird im Wesentlichen ausgeführt auf einem Leitrechner, der stationär oder auf einem der in Fig. 1 mit 1 bzw 2 bezeichneten an dem Verfahren beteiligten Fahrzeuge installiert sein kann. Fahrzeuge, auf denen der Leitrechner nicht installiert ist, verfügen jeweils über einen Bordrechner, der eingerichtet ist, Betriebszustandsdaten des Fahrzeugs, auf dem er installiert ist, zu sammeln und diese, gegebenenfalls in vorverarbeiteter Form, an den Leitrechner zu übermitteln. Die Kommunikation zwischen Bordrechnern und Leitrechner sowie eventuell von Bordrechnern der Fahrzeuge 1, 2 untereinander erfolgt per Funk, wobei zur Überbrückung großer Entfernungen, zum Beispiel zwischen einem auf einem Feld im Einsatz befindlichen Fahrzeug 1 und einem an einen von dem Feld entfernten Stützpunkt 3 ortsfesten Leitrechner, ein zellulares Mobilfunknetz genutzt werden kann.

Als Beispiel für einen mit dem erfindungsgemäßen Verfahren gesteuerten Einsatz soll im Folgenden ein Ernteeinsatz betrachtet werden. Bei den beteiligten Fahrzeugen 1, 2 kann es sich um Erntemaschinen 1 und Transportfahrzeuge 2 eines einzelnen Landwirts, genossenschaftlich genutzte Fahrzeuge oder die Fahrzeuge eines Lohnunternehmers handeln, der Ernteeinsätze im Auftrag von Landwirten abwickelt. Die Fahrzeuge umfassen insbesondere mehrere Mähdrescher 1, die sich in technischen Eigenschaften wie etwa der Breite ihres Erntevorsatzes, ihrer maximalen Geschwindigkeit im Ernteeinsatz oder ihrer Korntankkapazität unterscheiden können, mehrere Straßentransporter 2 zur Beförderung des Ernteguts vom Feld zum Einlager- oder Verarbeitungsplatz, die sich ebenfalls in technischen Eigenschaften wie Geschwindigkeit und Zuladung unterscheiden können, sowie gegebenenfalls einen oder mehrere Feldtransporter für die Beförderung des Ernteguts von den Mähdreschern 1 zu den Straßentransportern 2.

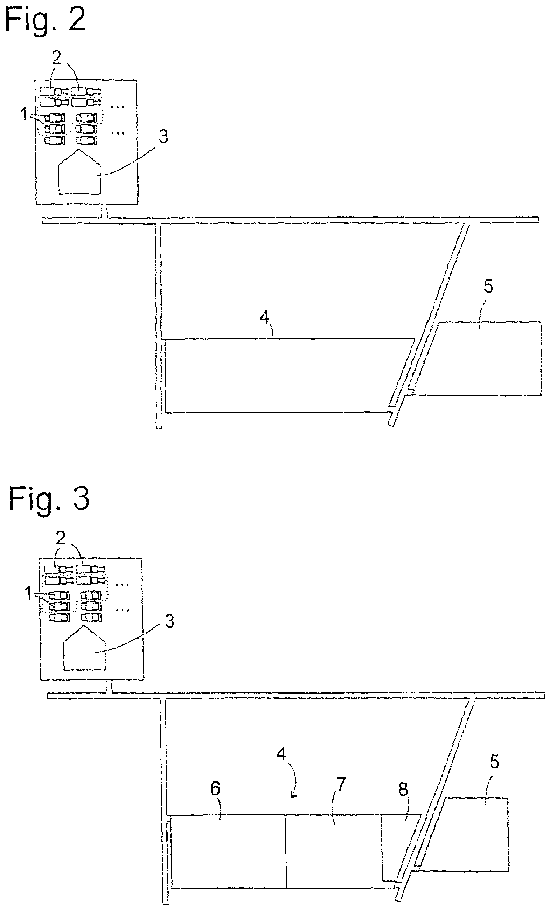

Vorgaben, von denen das Verfahren ausgeht, sind zunächst Lage und Größe der in Fig. 2 mit 4 bzw. 5 bezeichneten abzuerntenden Felder, die Lage eines oder mehrerer Stützpunkte 3, an denen das geerntete Material zur Lagerung oder Weiterverarbeitung zusammengetragen werden soll, ein vorgesehener Erntezeitraum, der mit einer Genauigkeit von mehreren Tagen bis einigen Stunden spezifiziert sein kann, sowie Angaben über die Verfügbarkeit von Personal zur Bedienung der Maschinen 1, 2. Anhand dieser Vorgaben, der bekannten Fläche oder der gemutmaßten Erntegutmenge der Felder 4, 5 sowie der bekannten Entfernungen zwischen den Feldern und den Stützpunkten wird in einem ersten Schritt der Grobplanung S1 der voraussichtliche Bedarf an Fahrzeugen der verschiedenen Typen für die Durchführung des Ernteeinsatzes abgeschätzt. Fig. 2 veranschaulicht diese Festlegung durch einen um die für den Einsatz vorgesehenen Fahrzeuge 1, 2 herum gezeichneten Rahmen.

Die Abschätzung des Fahrzeugbedarfs kann zum Beispiel basierend auf einer Berechnung der Fahrzeiten der Mähdrescher 1 zu den Feldern und der anhand der Gesamterntemenge und der Verarbeitungskapazität der Mähdrescher 1 abgeschätzten Dauer der Feldbearbeitung erfolgen. Um die Fahrzeiten der Mähdrescher 1 realistisch abschätzen zu können, umfasst dieser Schritt gleichzeitig für jeden Mähdrescher 1 die Festlegung, auf welchen der mehreren, gegebenenfalls örtlich voneinander getrennten Felder 4, 5 der Mähdrescher 1 arbeiten soll, und in welcher Reihenfolge dies zu geschehen hat. Dabei können auch mehrere Mähdrescher 1 zum gleichzeitigen Einsatz auf einem Feld 4 eingeplant werden.

Die Grobplanung des Schritts S1 kann lange Zeit vor dem tatsächlichen Ernteeinsatz stattfinden, so dass der ungefähre Bedarf an Maschinen und Personal für den Ernteeinsatz langfristig im Voraus bekannt ist und gegebenenfalls die Verfügbarkeit von Personal dem Bedarf entsprechend beeinflusst werden kann.

Eine langfristig im Voraus durchgeführte Grobplanung kann sich als unzweckmäßig erweisen, wenn wenige Tage vor dem geplanten Einsatz ein Wetterbericht für den Einsatzzeitraum zur Verfügung steht. Der Wetterbericht kann insbesondere dazu führen, dass das ursprünglich für den Ernteeinsatz vorgesehene Zeitfenster sich erheblich verkürzt, weil die Ernte vor einem in dem Wetterbericht angekündigten Niederschlag eingebracht werden muss. In diesem Fall überprüft der Leitrechner, ob die zuvor getroffene Festlegung der Zahl der beteiligten Fahrzeuge 1, 2 noch mit dem, verkürzten Zeitfenster kompatibel ist, oder ob die Zahl der Fahrzeuge erhöht werden muss, um die Ernte rechtzeitig einzubringen. Wenn letzteres der Fall ist, muss die gesamte Grobplanung S1 wiederholt werden, und auch eventuell bereits ausgeführte, auf dieser Grobplanung basierende weitere Planungsschritte werden verworfen.

Wenn die Grobplanung S1 erfolgreich durchlaufen worden ist, d.h. wenn die Abschätzung ergibt, dass die Ernte mit den vorgesehenen Fahrzeugen in der vorgesehenen Zeit einbringbar sein sollte, schließt sich ein Schritt S2 der Feldplanung S2 an. Basierend auf geografischen Daten, die den Randverlauf des Feldes, Zufahrten zum Feld sowie Wege zwischen den Zufahrten und den Verarbeitungs- oder Sammelpunkten beschreiben, wird jedes Feld in Teilflächen unterteilt, die jeweils einem einzigen Mähdrescher zur Bearbeitung zugewiesen werden. Um eine effiziente Bearbeitung des gesamten Feldes zu ermöglichen, erfolgt die Aufteilung in Teilflächen derart, dass die Wege, die der Feldtransporter zur Beförderung von Erntegut von den Mähdreschern 1 zu den Straßentransportern 2 zurückzulegen hat, oder die, wenn kein Feldtransporter verwendet wird, die Straßentransporter 2 auf den Feldern fahren müssen, möglichst kurz werden und auch die Straßentransporter 2 den Stützpunkt 3 oder eventuell mehrere verschiedene Stützpunkte 3 schnell erreichen können.

Fig. 3 zeigt exemplarisch eine Aufteilung der Felder 4, 5 in Teilflächen. Das große Feld 4 ist gegliedert in drei Teilflächen 6, 7, 8; das kleinere Feld 5 bleibt ungegliedert, da seine Flächenausdehnung kleiner ist als die im vorgesehenen Einsatzzeitraum von einem Mähdrescher 1 bearbeitbare Fläche und der Einsatz mehrerer Mähdrescher 1 daher nicht erforderlich erscheint.

Weitere Kriterien, die bei der Zerlegung in Teilflächen berücksichtigt werden können, sind erwartete örtliche Verteilungen von qualitätsbestimmenden Eigenschaften des Ernteguts wie etwa Feuchte, Reifegrad, Reinheit, etc. Derartige Daten können von einem Benutzer durch eine Vorabinspektion des Feldes vor dem Ernteeinsatz erfasst und manuell in das System eingegeben werden; vorzugsweise erfolgt ihre Gewinnung automatisch, zum Beispiel durch Auswertung hoch auflösender Luft- oder Satellitenbilder des Pflanzenbestandes auf den Feldern 4, 5 oder anhand von entsprechenden ortsaufgelösten qualitätsrelevanten Daten, die im Rahmen früherer Ernteeinsätze auf den gleichen Feldern von einem dort eingesetzten Mähdrescher erfasst und an den Leitrechner übermittelt worden sind. Derartige Daten, die auch bei der Durchführung des geplanten Ernteeinsatzes von neuem erhoben werden, können, wie eingangs erwähnt, per Funk in Echtzeit an den Leitrechner übermittelt werden; denkbar ist aber auch, zur Minimierung des Funk-Datenverkehrs nur einzelne im Folgenden noch genauer erläuterte Daten in Echtzeit an den Leitrechner zu übermitteln und die Gesamtheit der ortsaufgelösten Daten auf einem Datenträger des Bordrechners des Mähdreschers zwischenzuspeichern und sie von dort nach Abschluss des Ernteeinsatzes auf den Leitrechner zu überspielen, damit sie diesem für die Planung eines zukünftigen Einsatzes zur Verfügung stehen.

Aus diesen ortsaufgelösten Daten kann sich beispielsweise ergeben, dass der Reifegrad des Ernteguts auf einer durch Klima oder Bodenqualität benachteiligten Teilfläche des Feldes 4, beispielsweise dem Nordhang eines Hügels, schlechter ist als auf einer bevorzugten, besser besonnten Teilfläche, so dass es zweckmäßig ist, diese Teilflächen von verschiedenen Mähdreschern bearbeiten zu lassen, so dass, anstatt Erntegut unterschiedlicher Reifegrade zu mischen, ein Mähdrescher nur hochwertiges, gut ausgereiftes Erntegut sammelt, während weniger ausgereiftes Erntegut, das eventuell eine geringere Wertigkeit besitzt oder auch nur nach der Ernte anders behandelt werden muss, von einem zweiten Mähdrescher geerntet wird oder seine Ernte gar auf einen späteren Zeitpunkt verschoben wird.

Eine entsprechende Aufteilung in Teilflächen 6, 7, 8 kann auch unter Berücksichtigung beispielsweise des Feuchtegrads des Ernteguts erfolgen. So kann etwa ein Mähdrescher 1 auf der Teilfläche 6 trockenes Erntegut aufnehmen, das anschließend direkt gelagert oder weiter verarbeitet werden kann, während gleichzeitig ein zweiter Mähdrescher 1 feuchtes Erntegut auf der Teilfläche 7 aufnimmt, das vor der Lagerung oder Weiterverarbeitung einer Trocknung bedarf. So verringert sich die Gesamtmenge an zu trocknendem Erntegut, und dementsprechend verringern sich auch die Kosten der Trocknung.

Auch die Geometrie der Felder ist ein Kriterium, das bei der Aufteilung in Teilflächen berücksichtigt werden kann. So ist im in Fig. 3 gezeigten Fall die Aufteilung des Feldes 4 so vorgenommen, dass zwei Teilflächen 6, 7 von im Wesentlichen rechteckiger Form und eine im Wesentlichen dreieckige Teilfläche 8 erhalten werden. Wenn Mähdrescher von unterschiedlichen Typen im Einsatz sind, wird zweckmäßigerweise die aufgrund ihrer Form relativ schwierig zu beerntende Teilfläche 8 zusammen mit dem Feld 5 einem kleineren, wendigeren Mähdrescher zugewiesen als die Teilflächen 6, 7.

Anhand der Festlegung der Teilflächen 6, 7, 8 kann abgeschätzt werden, wie lange jeder Mähdrescher 1 zur Bearbeitung der ihm zugewiesenen Teilflächen und zum Fahren von einer Teilfläche zur nächsten braucht, wann sein Korntank voll sein wird und entleert werden muss und wie lange Feldtransporter und Straßentransporter zum Weiterbefördern des Tankinhalts benötigen. Dabei kann sich herausstellen, dass mangels verfügbarer Transportkapazität der eine oder andere Mähdrescher 1 nicht kurzfristig entladen werden kann, oder dass mangels ausreichender Erntekapazität der Mähdrescher 1 die Transportfahrzeuge 2 nicht hinreichend kontinuierlich ausgelastet werden können. Wenn dies für eine Teilflächenaufteilung der Fall ist, wird sie verworfen und eine neue ausprobiert.

Falls keine geeignete Teilflächenaufteilung gefunden wird, sei es weil sie nicht existiert oder weil sie in einer begrenzten zur Verfügung stehenden Rechenzeit nicht gefunden wird, so wird dies in Schritt S3 festgestellt, und das Verfahren kehrt zurück zu Schritt S1, um die dort getroffenen Vorgaben so zu ändern, dass sie leichter erfüllbar sind, zum Beispiel durch Verlängern des Zeitfensters oder durch Erhöhen der Zahl der für den Einsatz vorgesehenen Maschinen 1, 2.

Wenn in Schritt S3 festgestellt wird, dass eine in S2 gefundene Teilflächenaufteilung mit den Vorgaben der Grobplanung S1 vereinbar ist, so geht das Verfahren über zu Schritt S4, in welchem die abzufahrenden Wege 9 auf jeder Teilfläche, die zum Abfahren der Wege 9 einschließlich von Wendemanövern benötigte Zeit und die daraus resultierenden Zeitpunkte des Vollwerdens des Korntanks für jeden Mähdrescher 1, Orte 10 und Zeiten des Zusammentreffens jedes Mähdreschers mit einem Feldtransporter, die Wege der Feldtransporter und daraus resultierende Abfahrtzeiten der Straßentransporter 2 von den Feldern, ihre Wege zu den Stützpunkten 3 sowie von dort zu einem nächsten Feld, wo sie benötigt werden, vorausberechnet werden.

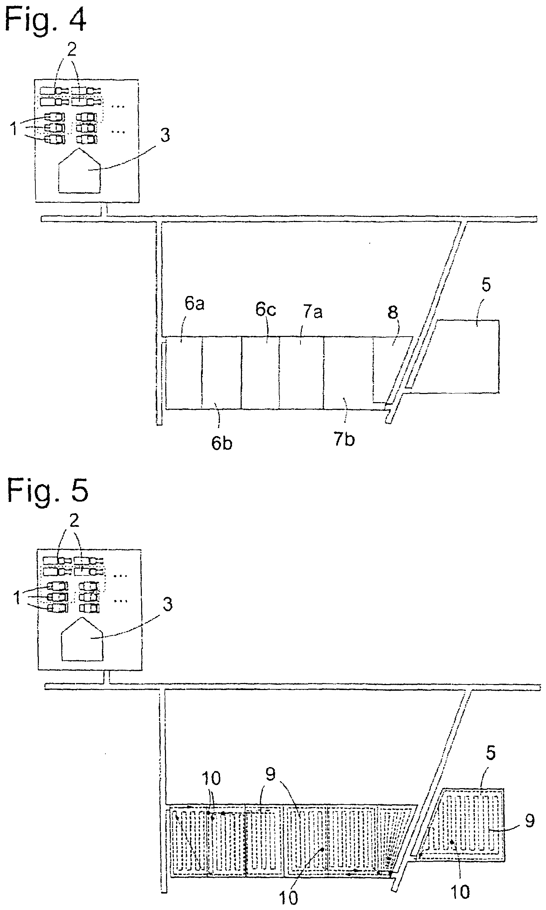

Im Rahmen des Schritts S4 wird zunächst überprüft, ob eine weitere Zerlegung der Teilflächen in Unterflächen sinnvoll ist. Dies ist insbesondere dann der Fall, wenn eine Teilfläche groß genug ist, um mit dem darauf erwarteten Erntegut den Korntank des dieser Teilfläche zugewiesenen Mähdreschers 1 mehrmals zu füllen, und/oder wenn ein qualitätsrelevanter Parameter des Ernteguts auf der Teilfläche ortsabhängig variabel ist. In letzterem Fall wird die Zerlegung der Teilfläche in Unterflächen wie etwa 6a, 6b, 6c oder 7a, 7b in Fig. 4 so vorgenommen, dass in einer Unterfläche Erntegut von im Mittel hoher Qualität, also z. B. gut ausgereiftes oder gut trockenes Erntegut und ein einer anderen Unterfläche Erntegut von im Mittel niedrigerer Qualität, also z.B. weniger reifes oder feuchteres Erntegut ansteht. Auf die Festlegung der Unterflächen folgt dann die Festlegung der Reihenfolge ihrer Bearbeitung und schließlich die Berechnung der Wege der Mähdrescher 1 auf jeder Unterfläche und zwischen den nacheinander zu bearbeitenden Unterflächen.

Für die Prognose des zeitabhängigen Füllstands des Korntanks eines Mähdreschers 1 werden ortsauflösende Daten über den Flächenertrag der Felder herangezogen, die in vorhergehenden Ernteeinsätzen von den Mähdreschern gewonnen worden sind.

Ein Beispiel für das Ergebnis einer solchen Planung, die festgelegten Wege 9 und die Überladestellen 10, ist in Fig. 5 gezeigt.

Auch im Planungsschritt S4 kann der Fall eintreten, dass die im vorhergehenden Planungsschritt S2 getroffenen Festlegungen sich als nicht praktikabel erweisen, z.B. weil bei der detaillierten Festlegung der Fahrtrouten 9 in Schritt S4 für wenigstens einen der Mähdrescher 1 keine Route gefunden wird, die dieser - unter Berücksichtigung eventueller Stillstandszeiten, in denen auf ein Transportfahrzeug zum Überladen gewartet werden muss - innerhalb des vorgegebenen Zeitfensters abfahren kann. Eine solche Inkompatibilität wird in Schritt S5 erkannt und führt dazu, dass das Verfahren zu Schritt S2 zurückkehrt.

Wenn vor Beginn des Ernteeinsatzes in Schritt S5 festgestellt wird, dass keine Inkompatibilität vorliegt bzw. dass der Schritt S4 erfolgreich ausgeführt worden ist, dann liegt eine vollständige Einsatzplanung vor, die für jedes beteiligte Fahrzeug im Einzelnen die zurückzulegenden Wege 9 und die Zeiten angibt, zu denen es sich an bestimmten Punkten dieser Wege wie etwa einer Feldzufahrt, einer Überladestelle 10, etc. befinden soll.

Während des Ernteeinsatzes erfassen Sensoren der Mähdrescher fortlaufend Eigenschaften des Ernteguts, die bei der vorhergehenden Einsatzplanung zugrunde gelegt worden sind, wie etwa Flächenertrag, Feuchtigkeit des Ernteguts etc. Diese erfassten Werte werden mit den der Planung zugrunde gelegten erwarteten Werten verglichen. Zu diesem Zweck können die an den Mähdreschern 1 erfassten Daten in Echtzeit an den Leitrechner übermittelt werden, oder die Bordrechner der Mähdrescher 1 können einen Satz der erwarteten Werte mit sich führen und von Zeit zu Zeit eine eventuelle Abweichung zwischen den mitgeführten und den neu gemessenen Werten an den Leitrechner übermitteln. Letzterer entscheidet anhand der erfassten Abweichungen in Echtzeit, ob die Abweichung so signifikant ist, dass sie eine Anpassung der Planung erforderlich macht.

Eine solche Anpassung kann z.B. nötig werden, wenn ein Mähdrescher während der Bearbeitung einer Unterfläche einen unerwünscht hohen Feuchtewert des Ernteguts feststellt, der von einem in der Planungsphase bei der Festlegung der Teil- und/oder Unterflächen angenommenen Wert abweicht. In diesem Fall wird zunächst versucht, über eine Änderung der Bearbeitungsreihenfolge der Unterflächen das Problem zu lösen. Die Bearbeitung der zu feuchten Unterfläche wird zurückgestellt, um ihr Gelegenheit zum Trocknen zu geben, und die Bearbeitung der anderen Unterflächen wird zeitlich vorgezogen.

Ein weiterer Anlass für eine Änderung des geplanten Ablaufs kann sein, dass sich während der Bearbeitung einer Unterfläche deren Flächenertrag als höher als erwartet herausstellt. In diesem Fall kehrt das Verfahren zunächst zum Schritt S4 zurück, um die Zeitpunkte des Überladens von dem auf der betreffenden Unterfläche arbeitenden Mähdrescher auf den Transporter 2 neu zu planen. Wenn dies gelingt, ohne die Transportkapazität des oder der Transporter 2 zu überfordern, wird der Ernteeinsatz mit den in dieser Weise geänderten Überladezeiten und -orten fortgesetzt.

Ein höherer Flächenertrag kann jedoch auch dazu führen, dass die Transportkapazität der für den Ernteeinsatz abgestellten Transportfahrzeuge nicht mehr ausreicht. In diesem Fall muss der Versuch, die Überladezeiten und -orte durch Wiederholen des Schritts S4 neu festzulegen, scheitern, weil die benötigten Transporter 2 nicht rechtzeitig zum nächsten erforderlichen Überladeort zurückkehren können. Dies wird in Schritt S5 erkannt und führt dazu, dass das Verfahren zum Schritt S2 zurückkehrt.

Um den Rechenaufwand in Grenzen zu halten, kann zunächst versucht werden, das Transportproblem zu lösen, indem bei der Wiederholung des Schritts S2 die bei einer früheren Ausführung des Schritts S2 festgelegten Teilflächen beibehalten werden und lediglich die Reihenfolge ihrer Bearbeitung verändert wird. Beispielsweise wird, während ein Mähdrescher die unerwartet ertragreiche Teilfläche bearbeitet, ein zweiter kurzfristig auf eine der ihm zugewiesenen Teilflächen umdirigiert, deren Flächenertrag als relativ gering bekannt ist. Erst wenn dies misslingt (was aufgrund der relativ geringen Zahl von zu untersuchenden Alternativen schnell festgestellt werden kann), wird versucht, die Teilflächen neu festzulegen. Wenn auch dieser Versuch scheitert, kehrt das Verfahren über Schritt S3 zu Schritt S1 zurück, wo, sofern verfügbar, zusätzliche Maschinen für den Einsatz abgestellt werden oder die vorgesehene Bearbeitungszeit verlängert wird. Anschließend werden anhand der so geänderten Vorgaben die Planungsschritte S2, S4 wiederholt.

In analoger Weise wie auf von der Prognose abweichende Erntemengen oder unerwartet feuchtes Erntegut kann der Leitrechner auch auf beliebige andere Abweichungen dieses laufenden Ernteeinsatzes vom geplanten Ablauf reagieren. Indem zum Beispiel Positionsdaten der beteiligten Maschinen laufend an den Leitrechner gemeldet werden, kann dieser jederzeit erkennen, wie weit die Position der einzelnen Maschinen von der ihnen in der aktuellen Planung zugedachten abweicht und ob die Abweichung eventuelle Anpassungen der Planung erforderlich macht. Auch hier wird zunächst versucht, die Abweichung durch eine Neuplanung der zu fahrenden Wege und der Überladezeiten und -orte aufzufangen. Gelingt dies nicht, geht das Verfahren in der Planungshierarchie eine Stufe zurück zu Schritt S2 und versucht eine Neufestlegung der Unterflächen. Erst wenn auch dies scheitert, wird eine weitere Stufe, zu S1, zurückgegangen, und die fundamentalen Festlegungen der Planung wie Zeitfenster und Maschinenzahl werden in Frage gestellt.

### Bezugszeichen

- 1: Mähdrescher
- 2: Transportfahrzeug
- 3: Stützpunkt
- 4: Feld
- 5: Feld
- 6: Teilfläche
- 7: Teilfläche
- 8: Teilfläche
- 9:

## Patentansprüche

1. Verfahren zur Steuerung eines Einsatzes von fahrbaren landwirtschaftlichen Maschinen auf einer Fläche mit wenigstens drei Schritten (S1; S2; S4) der Planung des Einsatzes, wobei der erste Planungsschritt (S1) die Grobplanung des voraussichtlichen Bedarfs an Fahrzeugen der verschiedenen Typen für die Durchführung des Ernteeinsatzes abschätzt und die Festlegung der Dauer des Einsatzes umfasst,
der zweite Planungsschritt (S2) umfasst die Unterteilung der zu bearbeitenden Fläche in jeweils einer Maschine zur Bearbeitung zugewiesenen Teilflächen und der dritte Planungsabschnitt (S4) umfasst die Festlegung einer Fahrtroute für jede Maschine auf der im Planungsschnitt (S2) der jeweiligen Maschine zugewiesenen Teilfläche und
im zweiten und dritten Planungsschritt (S2; S4) jeweils Festlegungen des vorhergehenden Schritts (S1; S2) verfeinert werden, und
einem Schritt des Ausführens (S6) des Einsatzes entsprechend dem in den Planungsschritten (S1, S2, S4) geplanten Ablauf,
wobei in dem Ausführungsschritt (S6) der Ablauf des Einsatzes überwacht und mit den in den Planungsschritten getroffenen Festlegungen verglichen wird und im Falle einer signifikanten Abweichung von den getroffenen Festlegungen wenigstens einer der Planungsschritte (S1; S2; S4) unter Berücksichtigung des jeweiligen Standes der Bearbeitung der Fläche wiederholt wird.

2. Verfahren nach Anspruch 1, **dadurch gekennzeichnet, dass** die Verfeinerung das Festlegen wenigstens eines Merkmals des Einsatzes kompatibel zu jedem in einem früheren Planungsschritt festgelegten Merkmal des Einsatzes umfasst, und dass in jedem Planungsschritt wenigstens ein Merkmal des Einsatzes festgelegt wird, wobei im Falle (S7) einer signifikanten Abweichung von den getroffenen Festlegungen in einem der festgelegten Merkmale wenigstens derjenige Planungsschritt wiederholt wird, in dem das betreffende Merkmal festgelegt wurde.

3. Verfahren nach Anspruch 2, **dadurch gekennzeichnet, dass** in wenigstens einem der Planungsschritte (S1, S2, S4) die Festlegung eines Merkmals anhand eines gemutmaßten Parameters der Fläche erfolgt, dass während des Schritts des Ausführens (S6) der Parameter erfasst wird und dass eine signifikante Abweichung des Merkmals angenommen wird (S7), wenn die Abweichung zwischen gemutmaßtem und erfassten Parameter eine Grenze überschreitet.

4. Verfahren nach Anspruch 3, **dadurch gekennzeichnet, dass** der Parameter ein globaler Parameter der zu bearbeitenden Fläche, insbesondere eine Erntegutmenge, ist.

5. Verfahren nach Anspruch 3, **dadurch gekennzeichnet, dass** der Parameter ein ortsabhängiger Parameter der zu bearbeitenden Fläche, insbesondere ein unter Flächenertrag, Reifegrad, Feuchtegehalt und Sortenreinheit ausgewählter Parameter, ist.

6. Verfahren nach einem der Ansprüche 3 bis 5, **dadurch gekennzeichnet, dass** der gemutmaßte Parameter anhand von bei wenigstens einer früheren Bearbeitung der Fläche gewonnener Daten gemutmaßt wird.

7. Verfahren nach einem der vorhergehenden Ansprüche, **dadurch gekennzeichnet, dass** wenn die Wiederholung des wenigstens einen Planungsschritts (S2; S4) scheitert, ein dem gescheiterten Planungsschritt vorangehender Planungsschritt (S1; S2) wiederholt wird.

8. Verfahren nach Anspruch 7, **dadurch gekennzeichnet, dass** zu den in einem oder mehreren frühen Planungsschritten (S1; S2; S4) zu treffenden Festlegungen die Dauer des Einsatzes, die Zahl der an dem Einsatz beteiligten Maschinen sowie die Zahl von Versorgungsfahrzeugen für den Transport von Material zwischen den Maschinen und wenigstens einem Stützpunkt gehören.

9. Verfahren nach Anspruch 7 oder 8, **dadurch gekennzeichnet, dass** zu den in einem oder mehreren späten Planungsschritten (S2; S4) zu treffenden Festlegungen eine Aufteilung (S2) der zu bearbeitenden Fläche in jeweils einer der Maschinen zur Bearbeitung zugewiesene Teilflächen umfasst.

10. Verfahren nach Anspruch 9, **dadurch gekennzeichnet, dass** auf den Planungsschritt (S2), in dem die zu bearbeitende Fläche in Teilflächen aufgeteilt wird, ein Planungsschritt (S4) folgt, in dem das festgelegte Merkmal eine Fahrtroute für jede Maschine auf der ihr zugewiesenen Teilfläche ist.

11. Verfahren nach Anspruch 10, **dadurch gekennzeichnet, dass** der auf die Aufteilung (S2) folgende Planungsschritt (S4) das Zerlegen der einer Maschine zur Bearbeitung zugewiesenen Teilfläche in Unterflächen, das Festlegen der Bearbeitungsreihenfolge der Unterflächen und das Festlegen einer Fahrtroute der Maschine auf jeder Unterfläche umfasst.

12. Verfahren nach Anspruch 11, **dadurch gekennzeichnet, dass** wenn während des Einsatzes (S6) der Planungsschritt des Zerlegens, Festlegens der Reihenfolge und der Fahrtroute (S4) wiederholt wird, zunächst versucht wird, die Reihenfolge unter Beibehaltung der zuvor festgelegten Unterflächen und Fahrtrouten neu festzulegen.

13. Verfahren nach einem der Ansprüche 9 bis 12, **dadurch gekennzeichnet, dass** wenigstens zwei der Teilflächen so festgelegt werden, dass sie sich im flächenbezogenen Mittelwert des ortsabhängigen Parameters signifikant unterscheiden.

## Claims

1. A method for controlling a deployment of mobile agricultural machines on an area, with at least three steps (S1; S2; S4) for planning the deployment, wherein the first planning step (S1) estimates the rough planning of the anticipated need for vehicles of a variety of types for carrying out the harvesting deployment and comprises determining the duration of the deployment, the second planning step (S2) comprises the subdivision of the area to be worked into divided areas to be worked allocated to a respective machine and the third planning step (S4) comprises determining a driving route for each machine on the divided area allocated to the respective machine in the planning step (S2), and
in the second and third planning steps (S2; S4) respectively, determinations from the preceding step (S1; S2) are refined, and
with a step (S6) for implementing the deployment in accordance with the procedure planned in the planning steps (S1, S2, S4), wherein in the implementation step (S6), the procedure for the deployment is monitored and compared with the determinations arrived at in the planning steps and in the case of a significant deviation from the determinations which have been arrived at, at least one of the planning steps (S1; S2; S4) is repeated, taking into consideration the respective status of working the area.

2. The method according to claim 1, **characterized in that** the refinement comprises determining at least one feature of the deployment which is compatible with each feature of the deployment determined in an earlier planning step, and **in that** at least one feature of the deployment is determined in each planning step, wherein in the case (S7) of a significant deviation in one of the determined features from the determinations which have been arrived at, at least that planning step in which the feature in question was determined is repeated.

3. The method according to claim 2, **characterized in that** in at least one of the planning steps (S1, S2, S4), a feature is determined with the aid of a conjectured parameter of the area, **in that** during the implementation step (S6), the parameter is detected and **in that** a significant deviation of the feature is assumed (S7) if the deviation between conjectured and detected parameter exceeds a limit.

4. The method according to claim 3, **characterized in that** the parameter is a global parameter of the area to be worked, in particular a harvested material quantity.

5. The method according to claim 3, **characterized in that** the parameter is a location-dependent parameter of the area to be worked, in particular a parameter selected from yield per unit area, degree of ripeness, moisture content and varietal purity.

6. The method according to one of claims 3 to 5, **characterized in that** the conjectured parameter is conjectured with the aid of data acquired in at least one previous working operation on the area.

7. The method according to one of the preceding claims, **characterized in that** if the repetition of the at least one planning step (S2; S4) fails, a planning step (S1; S2) which precedes the failed planning step is repeated.

8. The method according to claim 7, **characterized in that** the duration of the deployment, the number of machines involved in the deployment as well as the number of supply vehicles for the transport of material between the machines and at least one support point are included in the determinations to be arrived at in one or more preceding planning steps (S1; S2; S4).

9. The method according to claim 7 or claim 8, **characterized in that** dividing up (S2) the area to be worked into divided areas to be worked allocated to a respective one of the machines is included in the determinations to be arrived at in one or more subsequent planning steps (S2; S4).

10. The method according to claim 9, **characterized in that** the planning step (S2) in which the area to be worked is divided up into divided areas is followed by a planning step (S4) in which the determined feature is a driving route for each machine on the divided areas allocated thereto.

11. The method according to claim 10, **characterized in that** the planning step (S4) following the division step (S2) comprises breaking down the divided area allocated to a machine for working into sub-areas, determining the sequence for working the sub-areas and determining a driving route for the machine on each sub-area.

12. The method according to claim 11, **characterized in that** if, during the deployment (S6), the planning step of breaking down, determining the sequence and determining the driving route (S4) is repeated, then initially an attempt is made to determine the sequence afresh while retaining the previously determined sub-areas and driving routes.

13. The method according to one of claims 9 to 12, **characterized in that** at least two of the divided areas are determined in a manner such that they differ significantly in the mean with respect to area for the location-dependent parameter.

## Revendications

1. Procédé de commande d'une utilisation de machines agricoles roulantes sur une surface, comprenant au moins trois étapes (S1 ; S2 ; S4) de planification de l'utilisation, la première étape de planification (S1) évaluant la planification grossière du besoin prévisionnel de véhicules des différents types pour la réalisation de l'utilisation en récolte et incluant la fixation de la durée de l'utilisation,
la deuxième étape de planification (S2) incluant la division de la surface à traiter en surfaces partielles affectées chacune à une machine en vue de leur traitement, et la troisième étape de planification (S4) incluant la définition d'un itinéraire pour chaque machine sur la surface partielle affectée à la machine respective à l'étape de planification (S2),
et les définitions respectives de l'étape précédente (S1 ; S2) étant affinées à la deuxième et troisième étape de planification (S2 ; S4), et comprenant une étape d'exécution (S6) de l'utilisation conformément au déroulement planifié aux étapes de planification (S1, S2, S4),
le déroulement de l'utilisation étant surveillé à l'étape d'exécution (S6) et comparé aux valeurs définies aux étapes de planification et, en cas d'écart significatif par rapport aux valeurs définies, au moins une des étapes de planification (S1 ; S2 ; S4) étant répétée en tenant compte de l'état de traitement de la surface.

2. Procédé selon la revendication 1, **caractérisé en ce que** l'affinement consiste à définir au moins une caractéristique de l'utilisation compatible avec chaque caractéristique de l'utilisation définie à une étape de planification précédente, et **en ce qu'**à chaque étape de planification au moins une caractéristique de l'utilisation est définie, en cas (S7) d'écart significatif par rapport aux valeurs définies pour une des caractéristiques définies, au moins l'étape de planification à laquelle la caractéristique concernée a été définie étant répétée.

3. Procédé selon la revendication 2, **caractérisé en ce qu'**à au moins une des étapes de planification (S1, S2, S4) la définition d'une caractéristique est effectuée à l'aide d'un paramètre présumé de la surface, **en ce que** le paramètre est détecté lors de l'étape d'exécution (S6) et **en ce qu'**un écart significatif de la caractéristique est supposé (S7) lorsque l'écart entre paramètres présumé et détecté dépasse une limite.

4. Procédé selon la revendication 3, **caractérisé en ce que** le paramètre est un paramètre global de la surface à traiter, en particulier une quantité de produit de récolte.

5. Procédé selon la revendication 3, **caractérisé en ce que** le paramètre est un paramètre local de la surface à traiter, en particulier un paramètre sélectionné parmi rendement à la surface, degré de maturité, teneur en humidité et pureté variétale.

6. Procédé selon une des revendications 3 à 5, **caractérisé en ce que** le paramètre présumé est présumé à partir de données acquises lors d'au moins un traitement précédent de la surface.

7. Procédé selon une des revendications précédentes, **caractérisé en ce que**, si la répétition de ladite au moins une étape de planification (S2 ; S4) échoue, une étape de planification (S1 ; S2) précédant l'étape de planification qui a échoué est répétée.

8. Procédé selon la revendication 7, **caractérisé en ce que** les valeurs à définir à une ou plusieurs étapes de planifications précédentes (S1 ; S2 ; S4) comprennent la durée de l'utilisation, le nombre de machines impliquées dans l'utilisation ainsi que le nombre de véhicules d'approvisionnement pour le transport de matière entre les machines et au moins une base.

9. Procédé selon la revendication 7 ou 8, **caractérisé en ce que** les valeurs à définir à une ou plusieurs étapes de planifications suivantes (S2 ; S4) comprennent une division (S2) de la surface à traiter en surfaces partielles affectées respectivement à une des machines en vue de leur traitement.

10. Procédé selon la revendication 9, **caractérisé en ce que** l'étape de planification (S2) à laquelle la surface à traiter est divisée en surfaces partielles est suivie par une étape de planification (S4) à laquelle la caractéristique définie est un itinéraire pour chaque machine sur la surface partielle qui lui est affectée.

11. Procédé selon la revendication 10, **caractérisé en ce que** l'étape de planification (S4) qui suit la division (S2) comprend le fractionnement en sous-surfaces de la surface partielle affectée à une machine en vue de son traitement, la définition de l'ordre de traitement des sous-surfaces et la définition d'un itinéraire de la machine sur chaque sous-surface.

12. Procédé selon la revendication 11, **caractérisé en ce que**, si l'étape de planification du fractionnement, de définition de l'ordre et de l'itinéraire (S4) est répétée pendant l'utilisation (S6), l'ordre est redéfini en essayant avant tout de conserver les sous-surfaces et les itinéraires définis précédemment.

13. Procédé selon une des revendications 9 à 12, **caractérisé en ce qu'**au moins deux des surfaces partielles sont définies de façon qu'elles diffèrent significativement sur le plan de la valeur moyenne du paramètre local rapportée à la surface.
